# EUROPEAN PATENT APPLICATION

(11) **EP 2 466 419 A1**
(43) Date of publication of application: **20.06.2012**
(21) Application number: 11189728.6
(22) Date of filing: 18.11.2011
(51) Int. Cl.: G06F 3/00, G06F 17/24

(54) **Apparatus and method for providing electronic book service**

(30) Priority: 22.11.2010 KR 20100116312
(71) Applicant: Samsung Electronics Co., Ltd., Suwon-si, Gyeonggi-do (KR)
(72) Inventor: Seo, Yoo-Jin, Gyeonggi-do (KR)
(74) Representative: Hutter, Jacobus Johannes

(57) **Abstract**

An apparatus and method for changing electronic book (e-book) contents in an e-book system are provided. The method includes displaying e-book contents on a display unit, identifying at least one first information to be changed in the e-book contents, identifying change information for changing the first information, and, collectively changing the first information in the e-book contents according to the change information.

## Description

### BACKGROUND OF THE INVENTION

### 1. Field of the Invention:

The present invention relates to an apparatus and method for providing an electronic book (e-book) service. More particularly, the present invention relates to an apparatus and method for changing the display of e-book contents in an e-book system.

### 2. Description of the Related Art:

An e-book service, which is an information provision medium that substitutes a paper book, refers to a service of displaying text contents in an electronic display manner.

The e-book service is based on a scheme of displaying text contents stored in a flash memory or built-in hard disk through a display screen, and has an advantage of being capable of selecting and viewing a desired e-book among a number of stored e-books.

Recently, as portable terminals are being commercialized, interest has developed for an e-book service that is usable in a portable terminal. Accordingly, an e-book system needs various services for the convenience of an e-book user based on characteristics of digitized e-book contents.

### SUMMARY OF THE INVENTION

Aspects of the present invention are to address at least the above-mentioned problems and/or disadvantages and to provide at least the advantages below. Accordingly, an aspect of the present invention is to provide an apparatus and method for changing the substance of electronic book (e-book) contents according to a user's intention in an e-book system.

Another aspect of the present invention is to provide an apparatus and method for collectively marking a specific substance of e-book contents in an e-book system.

A further aspect of the present invention is to provide an apparatus and method for collectively changing an expression scheme of a specific word and phrase of e-book contents in an e-book system.

Yet another aspect of the present invention is to provide an apparatus and method for collectively changing a form of a specific word and phrase of e-book contents in an e-book system.

Still another aspect of the present invention is to provide an apparatus and method for providing a supplementary description service of e-book contents in an e-book system.

The above aspects are addressed by providing an apparatus and method for providing an e-book service.

According to an aspect of the present invention, a method for changing e-book contents in an e-book system is provided. The method includes displaying e-book contents on a display unit, identifying information to be marked, and collectively marking the identified information in the e-book contents.

According to another aspect of the present invention, a method for changing e-book contents in an e-book system is provided. The method includes displaying e-book contents on a display unit, identifying at least one first information to be changed in the e-book contents, identifying change information for changing the first information, and collectively changing the first information in the e-book contents according to the change information.

According to a further aspect of the present invention, a method for changing e-book contents in an e-book system is provided. The method includes displaying e-book contents on a display unit, identifying at least one of a word and phrase to add a supplementary description in the e-book contents, identifying the supplementary description to be added to the identified at least one of the word and phrase, and collectively adding the supplementary description to the identified at least one of the word and phrase in the e-book contents.

According to yet another aspect of the present invention, an apparatus for changing e-book contents in an e-book system is provided. The apparatus includes a controller and a display unit. The controller controls to display e-book contents, controls to identify information to be marked, and controls to collectively mark information to be marked in the e-book contents. According to the control of the controller, the display unit displays the e-book contents.

According to still another aspect of the present invention, an apparatus for changing e-book contents in an e-book system is provided. The apparatus includes a controller and a display unit. The controller controls to display e-book contents, controls to identify at least one first information to be changed in the e-book contents, controls to identify change information for changing the first information, and controls to collectively change the first information in the e-book contents according to the change information. According to the control of the controller, the display unit displays the e-book contents.

According to still another aspect of the present invention, an apparatus for changing e-book contents in an e-book system is provided. The apparatus includes a controller and a display unit. The controller controls to display e-book contents, controls to identify at least one of a word and phrase to add a supplementary description in the e-book contents, controls to identify the supplementary description to be added to at least one of the word and phrase, and controls to collectively add the supplementary description to the identified at least one of the word and phrase in the e-book contents. According to the control of the controller, the display unit displays the e-book contents.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a construction of an electronic book (e-book) reader according to an exemplary embodiment of the present invention;

FIG. 2 is a flowchart illustrating a procedure for providing a marking service according to an exemplary embodiment of the present invention;

FIG. 3 is a flowchart illustrating a procedure for providing a phrase change service according to an exemplary embodiment of the present invention;

FIG. 4 is a flowchart illustrating a procedure for providing a phrase change service according to another exemplary embodiment of the present invention;

FIG. 5 is a flowchart illustrating a procedure for providing a supplementary description addition service according to an exemplary embodiment of the present invention;

FIG. 6 is a flowchart illustrating a procedure for providing an expression scheme change service according to an exemplary embodiment of the present invention; and

FIG. 7 is a diagram illustrating a screen configuration of an e-book reader according to an exemplary embodiment of the present invention.

Throughout the drawings, it should be noted that like reference numbers are used to depict the same or similar elements, features, and structures.

### DETAILED DESCRIPTION OF exemplary EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Below, exemplary embodiments of the present invention provide a technology for providing an electronic book (e-book) service.

In the following description, it is assumed that e-book contents are composed of a text or extensible Markup Language (XML).

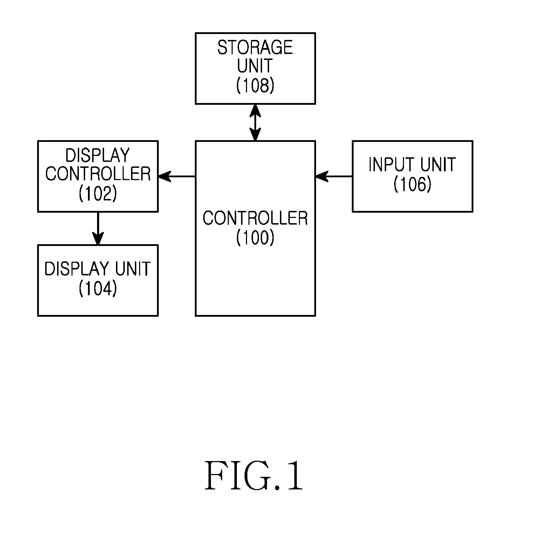

An e-book reader providing an e-book service is constructed as illustrated in FIG. 1. Here, the e-book reader providing the e-book service includes an electronic device using an electronic display scheme. For example, the e-book reader providing the e-book service includes a computer using an electronic display scheme, a Portable Digital Assistant (PDA), a portable computer, a terminal primarily intended for use with e-books, a mobile communication terminal, a portable terminal, a navigation device, a smart phone, a net book, a Mobile Internet Device (MID), a Ultra Mobile Personal Computer (UMPC), a tablet Personal Computer (PC), and the like.

FIG. 1 illustrates a construction of an e-book reader according to an exemplary embodiment of the present invention.

Referring to FIG. 1, the e-book reader includes a controller 100, a display controller 102, a display unit 104, an input unit 106, and a storage unit 108. According to other exemplary embodiments, the e-book reader may include additional and/or different units. Similarly, the functionality of two or more of the above units could be integrated into a single component.

The controller 100 controls general operations of the e-book reader. For example, the controller 100 controls output of a menu screen for a user interface, storage of e-book contents, extraction of e-book contents stored in the storage unit 108, and display of the e-book contents. Also, the controller 100 provides change information of e-book contents input through the input unit 106, to the display controller 102.

According to the control of the controller 100, the display controller 102 converts a menu screen and e-book contents into a displayable signal and provides the displayable signal to the display unit 104. At this time, the display controller 102 controls to change and display the substance of e-book contents according to a user's intention input through the input unit 106. For example, the display controller 102 controls to collectively mark specific substance in the e-book contents. For another example, the display controller 102 controls to collectively change an expression scheme of a specific word and phrase in the e-book contents. For further example, the display controller 102 controls to collectively change a specific word and phrase into a different word and phrase in the e-book contents. For yet another example, the display controller 102 controls to collectively change a form of a specific word and phrase of the e-book contents. For still another example, the display controller 102 controls to provide a supplementary description service for the e-book contents.

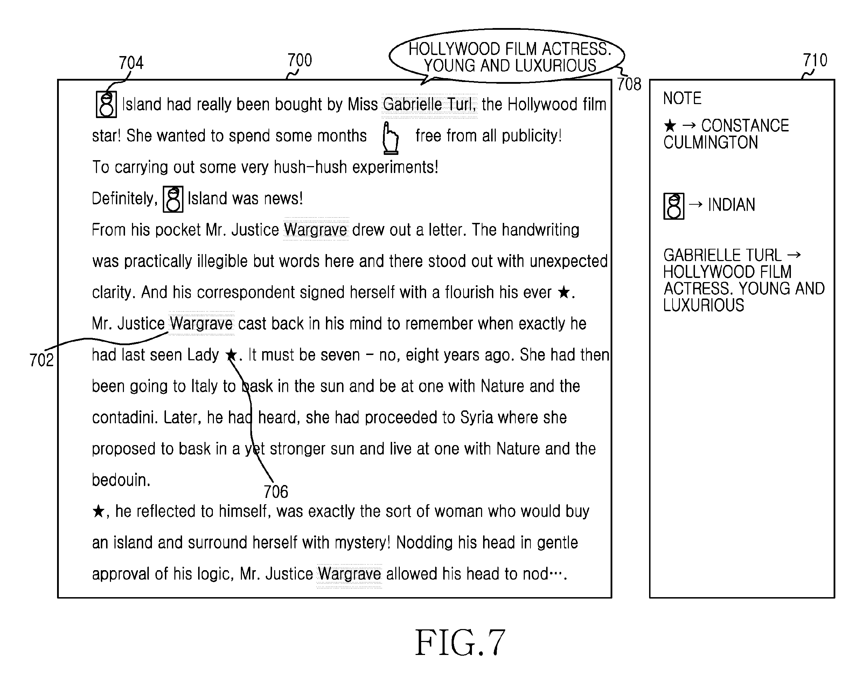

According to the control of the display controller 102, the display unit 104 displays state information of the e-book reader, a menu screen, and e-book contents. At this time, the display unit 104 can change and display the substance of the e-book contents according to the control of the display controller 102, an example of which is described below with reference to FIG. 7.

FIG. 7 is a diagram illustrating a screen configuration of an e-book reader according to an exemplary embodiment of the present invention.

Referring to FIG. 7, the display unit 104 collectively marks 702 a specific substance in the e-book contents 700. For another example, as illustrated in FIG. 7, the display unit 104 collectively changes 704, 706 a specific word or phrase into an image or emoticon in the e-book contents 700. For further example, as illustrated in FIG. 7, the display unit 104 displays a supplementary description 708 for a specific word and phrase of the e-book contents 700. For yet another example, the display unit 104 collectively changes a color or typeface of a specific word and phrase of the e-book contents 700. For still another example, the display unit 104 collectively changes a specific word and phrase of the e-book contents 700 into a different word and phrase. Additionally, as illustrated in FIG. 7, the display unit 104 displays change information 710 of the e-book contents 700 such that the change information 710 is distinguished from the e-book contents 700.

Returning to FIG. 1, the input unit 106 provides input data generated by user's selection, to the controller 100. For example, the input unit 106 provides change information input by a user to the controller 100.

The storage unit 108 can be composed of a program storage unit for storing a program for controlling an operation of an e-book reader and a data storage unit for storing data generated in program execution. For example, the storage unit 108 stores e-book contents provided from the controller 100 and various menu data used for a user interface for an e-book service.

In the aforementioned construction, the controller 100 can perform a function of the display controller 102. These are separately constructed in order to distinguish and describe respective functions in the exemplary embodiments of the present invention. Thus, in actual realization, construction can be such that the controller 100 processes all or some of the functions of the display controller 102.

In the aforementioned construction also, it is illustrated that the display unit 104 and the input unit 106 are separately constructed to distinguish and describe the respective functions. Accordingly, in actual realization, the display unit 104 and the input unit 106 may be constructed as one module.

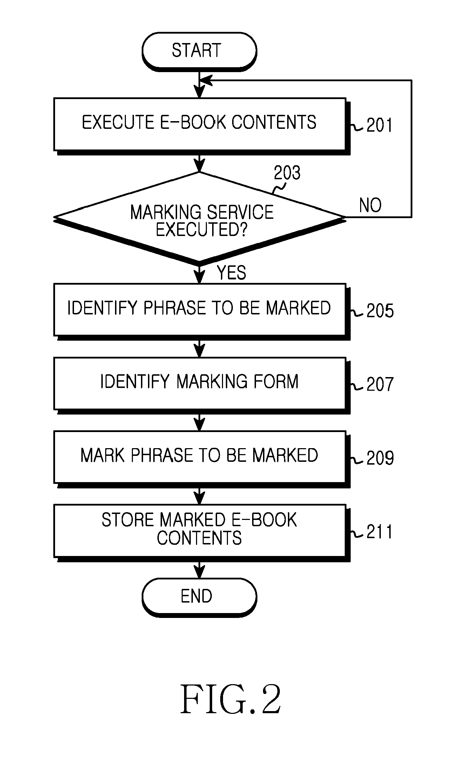

FIG. 2 illustrates a procedure for providing a marking service according to an exemplary embodiment of the present invention. The following description is made assuming that, according to a user's intention, an e-book reader marks a specific phrase in e-book contents. However, according to a user's intention, the e-book reader can also mark a specific word in the e-book contents. At this time, according to a user's intention, the e-book reader may also mark a plurality of words.

Referring to FIG. 2, in step 201, the e-book reader executes e-book contents. For example, the e-book reader displays e-book contents selected by a user on a display unit 104 such that the user can view the e-book contents.

After that, the e-book reader proceeds to step 203 and determines whether to execute a marking service. For example, the e-book reader determines if a marking service menu is selected by the user.

In a case where the marking service is not executed, the e-book reader returns to step 201 and displays e-book contents on the display unit 104 such that the user can view the e-book contents.

On the other hand, in a case where the marking service is executed, the e-book reader proceeds to step 205 and identifies a phrase to be marked that the user selects. For example, the e-book reader identifies a phrase to be marked that the user selects through the input unit 106, in the e-book contents displayed on the display unit 104. For another example, the e-book reader identifies a phrase to be marked that the user inputs through the input unit 106. At this time, the e-book reader may identify a plurality of phrases that the user selects.

Also, the e-book reader proceeds to step 207 and identifies a form of a mark for the phrase that the user has selected. For example, the e-book reader identifies a predefined mark. For another example, the e-book reader may identify a mark that the user inputs. Here, the mark includes a marking scheme, a marking color and the like.

After identifying the phrase to be marked and the form of the mark, the e-book reader proceeds to step 209 and marks the phrase to be marked with the identified form of the mark. At this time, the e-book reader collectively marks the identified phrase in all of the e-book contents. For example, as illustrated in FIG. 7, the e-book reader highlights 702 "Wargrave" using a pink color. For another example, in a case where the user selects a plurality of phrases, the e-book reader may collectively mark the plurality of phrases. At this time, the e-book reader may mark the plurality of phrases using a different mark for each phrase.

After marking the phrase, the e-book reader proceeds to step 211 and stores the marked e-book contents.

Next, the e-book reader terminates the algorithm according to an exemplary embodiment of the present invention.

In the aforementioned exemplary embodiment, the e-book reader stores e-book contents in which a specific phrase has been marked.

In another exemplary embodiment, the e-book reader may mark a corresponding phrase only in e-book contents currently in execution.

In the aforementioned exemplary embodiment, in a case where a user selects a marking service, the e-book reader identifies a phrase to be marked. In another exemplary embodiment, in a case of executing e-book contents, the e-book reader may provide a marking service without a separate menu selection.

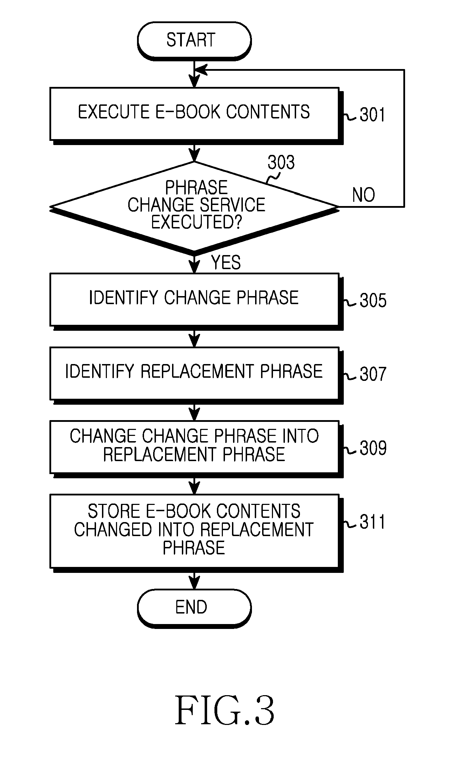

FIG. 3 illustrates a procedure for providing a phrase change service according to an exemplary embodiment of the present invention. The following description is made assuming that an e-book reader changes a specific phrase of e-book contents into a different phrase. However, the e-book reader is also applicable in a case of changing a specific word of the e-book contents into a different word.

Referring to FIG. 3, in step 301, the e-book reader executes e-book contents. For example, the e-book reader displays e-book contents selected by a user on a display unit 104 such that the user can view the e-book contents.

After that, the e-book reader proceeds to step 303 and determines whether to execute a phrase change service. For example, the e-book reader determines if a phrase change service menu is selected by the user.

In a case where the phrase change service is not executed, the e-book reader returns to step 301 and displays e-book contents on the display unit 104 such that the user can view the e-book contents.

On the other hand, in a case where the phrase change service is executed, the e-book reader proceeds to step 305 and identifies a change phrase that the user selects. For example, the e-book reader identifies a change phrase that the user selects through an input unit 106, in the e-book contents displayed on the display unit 104. For another example, the e-book reader may identify a change phrase that the user inputs through the input unit 106. Here, the term 'change phrase' means a phrase to be changed into a different phrase in the e-book contents.

Also, the e-book reader proceeds to step 307 and identifies a replacement phrase that the user selects. For example, the e-book reader identifies a replacement phrase that the user selects through the input unit 106, in information displayed on the display unit 104. For another example, the e-book reader may identify a phrase that the user inputs through the input unit 106. Here, the term 'replacement phrase' means a phrase that the change phrase changes into.

After identifying the change phrase and replacement phrase, the e-book reader proceeds to step 309 and collectively changes the change phrase into the replacement phrase in the e-book contents.

After changing the phrase, the e-book reader proceeds to step 311 and stores the e-book contents that have been changed with the replacement phrase.

After that, the e-book reader terminates the algorithm according to an exemplary embodiment of the present invention.

In the aforementioned exemplary embodiment, the e-book reader stores e-book contents that have been changed with a replacement phrase.

In another exemplary embodiment, the e-book reader may change a change phrase into a replacement phrase and display the replacement phrase only in e-book contents currently in execution.

In the aforementioned exemplary embodiment, in a case where a user selects a phrase change service, the e-book reader identifies a change phrase and a replacement phrase. In another exemplary embodiment, in a case of executing e-book contents, the e-book reader may provide a phrase change service without a separate menu selection.

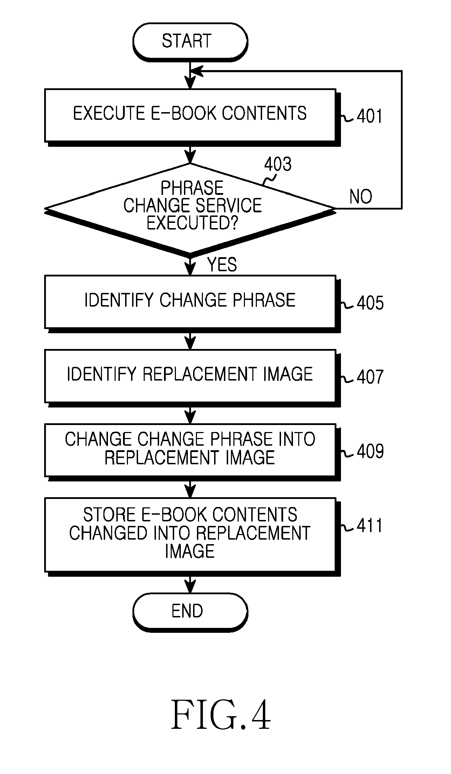

FIG. 4 illustrates a procedure for providing a phrase change service according to another exemplary embodiment of the present invention. The following description is made assuming that an e-book reader changes a specific phrase of e-book contents into an image. However, the e-book reader is also applicable in a case of changing a specific word of the e-book contents into an image.

Referring to FIG. 4, in step 401, the e-book reader executes e-book contents. For example, the e-book reader displays e-book contents selected by a user on a display unit 104 such that the user can view the e-book contents.

After that, the e-book reader proceeds to step 403 and determines whether to execute a phrase change service. For example, the e-book reader determines if a phrase change service menu is selected by the user.

In a case where the phrase change service is not executed, the e-book reader returns to step 401 and displays e-book contents on the display unit 104 such that the user can view the e-book contents.

On the other hand, in a case where the phrase change service is executed, the e-book reader proceeds to step 405 and identifies a change phrase selected by the user. For example, the e-book reader identifies a change phrase that the user selects through an input unit 106, in the e-book contents displayed on the display unit 104. For another example, the e-book reader may identify a change phrase that the user inputs through the input unit 106. Here, the term 'change phrase' means a phrase to be changed into an image in the e-book contents.

Also, the e-book reader proceeds to step 407 and identifies a replacement image selected by the user. Here, the term 'replacement image' means an image or emoticon that the change phrase changes into.

After identifying the change phrase and replacement image, the e-book reader proceeds to step 409 and collectively changes the change phrase into the replacement image in the e-book contents. For example, as illustrated in FIG. 7, the e-book reader collectively changes 704 "Indian" into snowman images (■), and collectively changes 706 "Constance Culmington" into star images (★).

After changing the phrase, the e-book reader proceeds to step 411 and stores the e-book contents that have been changed with the replacement image.

Next, the e-book reader terminates the algorithm according to an exemplary embodiment of the present invention.

In the aforementioned exemplary embodiment, the e-book reader stores e-book contents in which a phrase has been changed into an image.

In another exemplary embodiment, the e-book reader may change a corresponding phrase into an image only in e-book contents currently in execution.

In the aforementioned exemplary embodiment, in a case where a user selects a phrase change service, the e-book reader identifies a change phrase and a replacement image. In another exemplary embodiment, in a case of executing e-book contents, the e-book reader may provide a phrase change service without a separate menu selection.

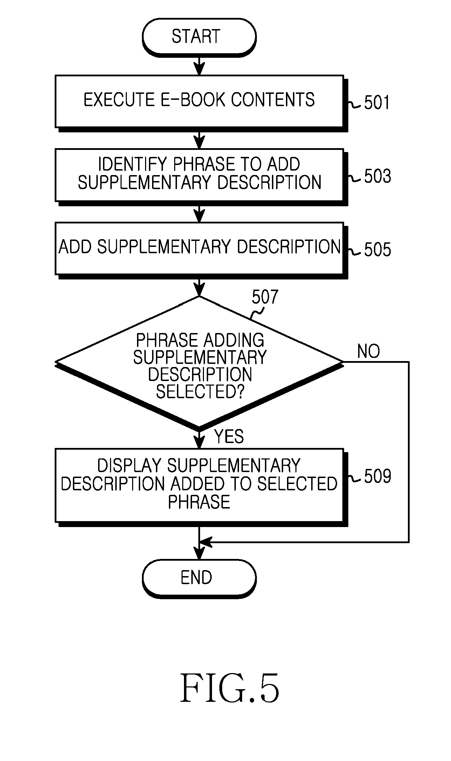

FIG. 5 illustrates a procedure for providing a supplementary description addition service according to an exemplary embodiment of the present invention. The following description is made assuming that an e-book reader adds a supplementary description to a specific phrase of e-book contents. However, the e-book reader can also add a supplementary description to at least one of a specific word and specific phrase of the e-book contents.

Referring to FIG. 5, in step 501, the e-book reader executes e-book contents. For example, the e-book reader displays e-book contents selected by a user on a display unit 104 such that the user can view the e-book contents.

After that, the e-book reader proceeds to step 503 and identifies a phrase to add a supplementary description selected by the user. For example, the e-book reader identifies a phrase that the user selects through an input unit 106, in the e-book contents displayed on the display unit 104. For another example, the e-book reader may identify a phrase that the user inputs through the input unit 106.

After identifying the phrase to add the supplementary description, the e-book reader proceeds to step 505 and adds a supplementary description to the phrase. For example, the e-book reader maps a supplementary description that the user inputs, to the phrase.

After that, the e-book reader proceeds to step 507 and determines if the phrase adding the supplementary description is selected.

In a case where the phrase adding the supplementary description is selected, the e-book reader proceeds to step 509 and displays the supplementary description on the selected phrase. For instance, as illustrated in FIG. 7, in a case where a supplementary description 708 is added to a "Gabrielle Turl", if the "Gabrielle Turl" is selected, the e-book reader displays the supplementary description 708 added to the "Gabrielle Turl" on a screen.

After that, the e-book reader terminates the algorithm according to an exemplary embodiment of the present invention.

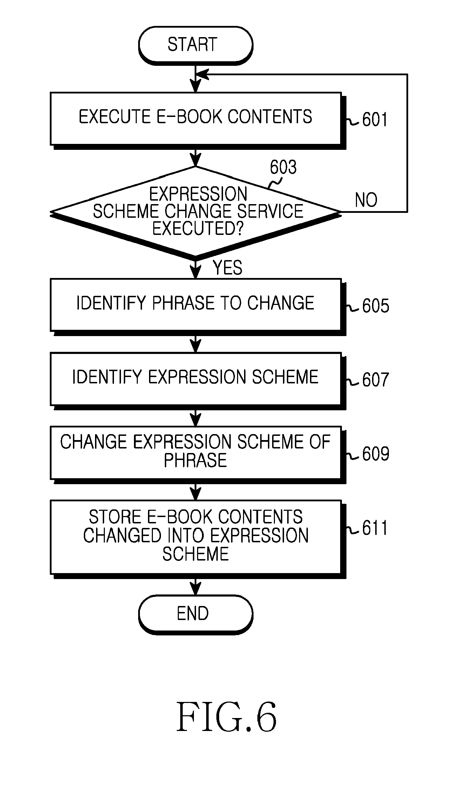

FIG. 6 illustrates a procedure for providing an expression scheme change service according to an exemplary embodiment of the present invention. The following description is made assuming that an e-book reader changes an expression scheme of a specific phrase of e-book contents. However, the e-book reader is also applicable in a case of changing an expression scheme of a specific word of the e-book contents.

Referring to FIG. 6, in step 601, the e-book reader executes e-book contents. For example, the e-book reader displays e-book contents selected by a user on a display unit 104 such that the user can view the e-book contents.

After that, the e-book reader proceeds to step 603 and determines whether to execute an expression scheme change service. For example, the e-book reader determines if an expression scheme change service menu is selected by the user.

In a case where the expression scheme change service is not executed, the e-book reader returns to step 601 and displays e-book contents on the display unit 104 such that the user can view the e-book contents.

On the other hand, in a case where the expression scheme change service is executed, the e-book reader proceeds to step 605 and identifies a phrase selected by the user. For example, the e-book reader identifies a phrase that the user selects through an input unit 106, in the e-book contents displayed on the display unit 104. For another example, the e-book reader may identify a phrase that the user inputs through the input unit 106.

Also, the e-book reader proceeds to step 607 and identifies change information on an expression scheme of the selected phrase. Here, the change information on the expression scheme includes information for changing at least one of a color of a phrase, a typeface, and a size.

After identifying the phrase and change information, the e-book reader proceeds to step 609 and collectively changes the expression scheme of the phrase in the e-book contents.

After changing the expression scheme of the phrase, the e-book reader proceeds to step 611 and stores the e-book contents with the changed expression scheme of the corresponding phrase.

Next, the e-book reader terminates the algorithm according to an exemplary embodiment of the present invention.

In the aforementioned exemplary embodiment, the e-book reader stores e-book contents in which an expression scheme of a phrase has been changed.

In another exemplary embodiment, the e-book reader may change and display an expression scheme of a corresponding phrase only in e-book contents currently in execution.

In the aforementioned exemplary embodiment also, in a case where a user selects an expression scheme change service, the e-book reader identifies a phrase to change an expression scheme and change information.

In another exemplary embodiment, in a case of executing e-book contents, the e-book reader may provide an expression scheme change service without a separate menu selection.

In the aforementioned exemplary embodiments, the description has been made assuming that an e-book reader provides each of a marking service, a word or phrase expression scheme change service, a word or phrase substance conversion service, and a supplementary description addition service. However, as illustrated in FIG. 7, the e-book reader may simultaneously provide at least one of the marking service, the word or phrase expression scheme change service, the word or phrase substance conversion service, and the supplementary description addition service.

As described above, exemplary embodiments of the present invention have an advantage of, by providing a service of collectively changing or displaying a specific substance according to a user's intention in an e-book system, being capable of easily changing the substance of e-book contents according to a user's intention, and increasing convenience to an e-book user.

Also, the exemplary embodiments of the present invention have an advantage of, by providing a supplementary description service in an e-book service, being capable of allowing an e-book user to easily detect the substance of e-book contents, making better use of the e-book contents, and enhancing convenience to the e-book user.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for changing electronic book (e-book) contents in an e-book system, the method comprising:
displaying e-book contents on a display unit;
identifying information to be marked; and
collectively marking the identified information in the e-book contents.

2. The method of claim 1, further comprising, before collectively marking the identified information, identifying marking information that indicates how to mark information,
wherein the collectively marking of the identified information in the e-book contents comprises collectively marking the identified information in the e-book contents according to the identified marking information.

3. A method for changing electronic book (e-book) contents in an e-book system, the method comprising:
displaying e-book contents on a display unit;
identifying at least one first information to be changed in the e-book contents;
identifying change information for changing the first information; and
collectively changing the first information in the e-book contents according to the change information.

4. A method for changing electronic book (e-book) contents in an e-book system, the method comprising:
displaying e-book contents on a display unit;
identifying at least one of a word and phrase to add a supplementary description in the e-book contents;
identifying the supplementary description to be added to the identified at least one of the word and phrase; and
collectively adding the supplementary description to the identified at least one of the word and phrase in the e-book contents.

5. An apparatus for changing electronic book (e-book) contents in an e-book system, the apparatus comprising:
a controller for controlling to display e-book contents, for controlling to identify information to be marked, and for controlling to collectively mark the identified information in the e-book contents; and
a display unit for, according to the control of the controller, displaying the e-book contents.

6. The method of claim 1 or the apparatus of claim 5, wherein the information to be marked comprises information of a word or phrase unit.

7. The apparatus of claim 5, wherein the controller controls to identify marking information that indicates how to mark information, and controls to collectively mark the identified information in the e-book contents according to the identified marking information.

8. The method of claim 2 or the apparatus of claim 7, wherein the marking information comprises at least one of a marking scheme and a marking color.

9. The method of claim 1 or the apparatus of claim 5, further comprising storing the marked e-book contents in a storage unit.

10. An apparatus for changing electronic book (e-book) contents in an e-book system, the apparatus comprising:
a controller for controlling to display e-book contents, for controlling to identify at least one first information to be changed in the e-book contents, for controlling to identify change information for changing the first information, and for controlling to collectively change the first information in the e-book contents according to the change information; and
a display unit for, according to the control of the controller, displaying the e-book contents.

11. The method of claim 3 or the apparatus of claim 10, wherein the first information comprises information of a word or phrase unit.

12. The method of claim 3 or the apparatus of claim 10, wherein the change information comprises at least one of color change information of the first information, typeface change information, word information for changing, phrase information for changing, and image information for changing.

13. The method of claim 3 or apparatus of claim 10, further comprising storing the e-book contents in which the first information has been changed according to the change information in a storage unit.

14. An apparatus for changing electronic book (e-book) contents in an e-book system, the apparatus comprising:
a controller for controlling to display e-book contents, for controlling to identify at least one of a word and phrase to add a supplementary description in the e-book contents, for controlling to identify the supplementary description to be added to at least one of the word and phrase, and for controlling to collectively add the supplementary description to the identified at least one of the word and phrase in the e-book contents; and
a display unit for, according to the control of the controller, displaying the e-book contents.

15. The method of claim 4 or the apparatus of claim 14, further comprising storing the e-book contents in which the supplementary description has been added in a storage unit.
